# EUROPÄISCHE PATENTANMELDUNG

(11) **EP 4 749 834 A1**
(43) Veröffentlichungstag der Anmeldung: **27.05.2026**
(21) Anmeldenummer: 25306923.1
(22) Anmeldetag: 19.11.2025
(51) Int. Cl.: H01R 9/26, H02B 1/052

(54) **GEHÄUSE**

(30) Priorität: 20.11.2024 DE 102024134115
(71) Anmelder: SCHNEIDER ELECTRIC INDUSTRIES SAS, 92500 Rueil-Malmaison (FR)
(72) Erfinder: Plsek, Martin, 76502 Otrokovice (CZ)
(74) Vertreter: Manitz Finsterwald Patent- und Rechtsanwaltspartnerschaft mbB

(57) **Zusammenfassung**

Ein Gehäuse zur Hutschienenmontage weist an seiner Rückseite eine Hutschienenhalterung mit Haltevorsprüngen auf, zwischen denen ein Federelement vorgesehen ist, mit dem das Gehäuse lösbar an einer Hutschiene befestigbar ist.

## Beschreibung

Die vorliegende Erfindung betrifft ein Gehäuse zur Hutschienenmontage, das eine Vorderseite, eine Rückseite, eine Oberseite und eine Unterseite aufweist, wobei an der Rückseite des Gehäuses eine Hutschienenhalterung vorhanden ist. Diese umfasst zumindest einen oberen Haltevorsprung und zumindest zwei untere Haltevorsprünge, mit denen das Gehäuse an einer Hutschiene angebracht werden kann. Zwischen den beiden unteren Haltevorsprüngen ist ein Federelement vorgesehen, mit dem das Gehäuse lösbar an der Hutschiene befestigbar ist.

Derartige Gehäuse sind aus dem Stand der Technik, insbesondere in Zusammenhang mit elektrischen Installationsgeräten, weitläufig bekannt. Unter einer Hutschiene wird hierbei eine DIN-Schiene verstanden, beispielsweise nach der früheren deutschen Norm DIN 46277 oder der heutigen europäischen Norm EN 50022. Eine solche Hutschiene weist zwei koplanar abgekantete Abschnitte auf, die zu einem Basisabschnitt der Hutschiene parallel beabstandet sind. Zur Befestigung des Gehäuses an einer solchen Hutschiene kann dieses mit zumindest einem Haltevorsprung an einem der abgekanteten Schenkel eingehakt und anschließend auf die Hutschiene abgeklappt werden. Mit Hilfe des Federelements wird dann in diesem Zustand eine Federkraft entweder auf das Gehäuse oder auf ein separates Verriegelungselement ausgeübt, wodurch das Gehäuse an der Hutschiene verriegelt ist. Durch Ausüben einer Kraft gegen das Federelement kann das Gehäuse wieder von der Hutschiene entfernt werden.

Es ist die Aufgabe der vorliegenden Erfindung, ein Gehäuse der vorstehend beschriebenen Art zu schaffen, das besonders kostengünstig herstellbar ist.

Die Lösung dieser Aufgabe erfolgt durch die Merkmale des Anspruchs 1 und insbesondere dadurch, dass das Federelement zwischen den beiden unteren Haltevorsprüngen einstückig an dem Gehäuse angeformt ist. Hierdurch lässt sich das Gehäuse zusammen mit den Haltevorsprüngen und dem Federelement, beispielsweise durch Spritzguss, aus einem Stück herstellen, was sehr kostengünstig möglich ist. Da das Federelement zwischen den beiden unteren Haltevorsprüngen, d.h. an der unteren Rückseite des Gehäuses positioniert ist, wird dieses nach erfolgter Montage nicht durch das Gewicht des Gehäuses bzw. des Installationsgerätes belastet, da sich das Gehäuse mit dem oberen Haltevorsprung an der Hutschiene abstützt. Somit wird das Gewicht des Gehäuses bzw. des Installationsgerätes von der Hutschiene und nicht von dem Federelement aufgenommen.

Vorteilhafte Ausführungsformen sind in der Beschreibung, der Zeichnung sowie den Unteransprüchen beschrieben.

Nach einer ersten vorteilhaften Ausführungsform kann das Federelement eine Bandschlaufe sein. Hierdurch ist einerseits auf einfache Weise eine gewünschte Auslegung von Federkraft und Federweg möglich. Andererseits kann durch eine solche Bandschlaufe eine Feder geschaffen werden, deren lokale Deformation im elastischen Bereich des Materials nur gering ist. Zudem ist eine zwischen den beiden unteren Haltevorsprüngen angeordnete Bandschlaufe von den Haltevorsprüngen selbst getrennt. Hierdurch werden Kräfte orthogonal zur Vorderseite und weg von dieser gerichtet, von den Haltevorsprüngen, jedoch nicht von dem Federelement aufgenommen.

Nach einer weiteren vorteilhaften Ausführungsform kann die Bandschlaufe zwei Wendepunkte aufweisen, wodurch ein vergleichsweise langes Federelement auf einem geringen Raum kompakt untergebracht werden kann. Gleichzeitig kann hierdurch die Federkraft des Federelementes wie gewünscht eingestellt werden.

Nach einer weiteren vorteilhaften Ausführungsform kann das Federelement in einer Seitenansicht einen S-förmigen und einen fragezeichenförmigen Abschnitt aufweisen, wodurch eine symmetrische Federanordnung mit ausreichender Federkraft geschaffen ist.

Nach einer weiteren vorteilhaften Ausführungsform kann das Federelement einen planaren Anlageabschnitt aufweisen, mit dem dieses an der Hutschiene anliegt. Hierdurch ist eine sichere Befestigung des Gehäuses an einer Hutschiene gewährleistet.

Nach einer weiteren vorteilhaften Ausführungsform kann der Anlageabschnitt beidseitig in jeweils einen planaren und von dem Anlageabschnitt sich abgewinkelt erstreckenden Verbindungsabschnitt übergehen. In diesem Fall wird die Federkraft erhöht, nachdem der Anlageanschnitt um einen vorbestimmten Hub verschoben worden ist, wenn das Gehäuse auf die Hutschiene aufgesetzt wird. In diesem Zusammenhang kann es vorteilhaft sein, wenn sich der planare Anlageabschnitt und die beiden sich an diesen anschließenden Verbindungsabschnitte über mindestens 40%, und insbesondere über mindestens 50%, des Abstands zwischen den beiden unteren Haltevorsprüngen erstrecken. Weiterhin kann es vorteilhaft sein, wenn die Länge des Federelements mindestens das Doppelte des Abstands zwischen den beiden unteren Haltevorsprüngen beträgt.

Wie vorstehend bereits erwähnt, ist es vorteilhaft, wenn das Federelement nicht zur Aufnahme von Kräften geeignet ist, die orthogonal zur Rückseite oder zur Vorderseite des Gehäuses orientiert sind. Diese Kräfte können nämlich bevorzugt nur von den Haltevorsprüngen aufgenommen werden, die hinter den abgekanteten Abschnitten der Hutschiene eingehakt werden.

Nach einer weiteren vorteilhaften Ausführungsform kann an der Rückseite des Gehäuses ein mit mindestens einer Befestigungsöffnung versehener Abstandhalter angeformt sein, so dass das Gehäuse auch mit Hilfe einer Schraube oder dergleichen ohne Hutschiene an einer Wand befestigt werden kann.

Nach einem weiteren Aspekt betrifft die vorliegende Erfindung auch ein elektrisches Installationsgerät mit einem Gehäuse der vorstehend beschriebenen Art.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines an einer DIN-Schiene befestigten Gehäuses;
- Fig. 2: eine perspektivische Rückansicht des Gehäuses von Fig. 1;
- Fig. 3: eine Draufsicht auf die Rückseite des Gehäuses von Fig. 1 und Fig. 2;
- Fig. 4: eine Seitenansicht des an der Hutschiene befestigten Gehäuses; und
- Fig. 5: eine Position des Gehäuses relativ zur Hutschiene bei einer Montage oder Demontage.

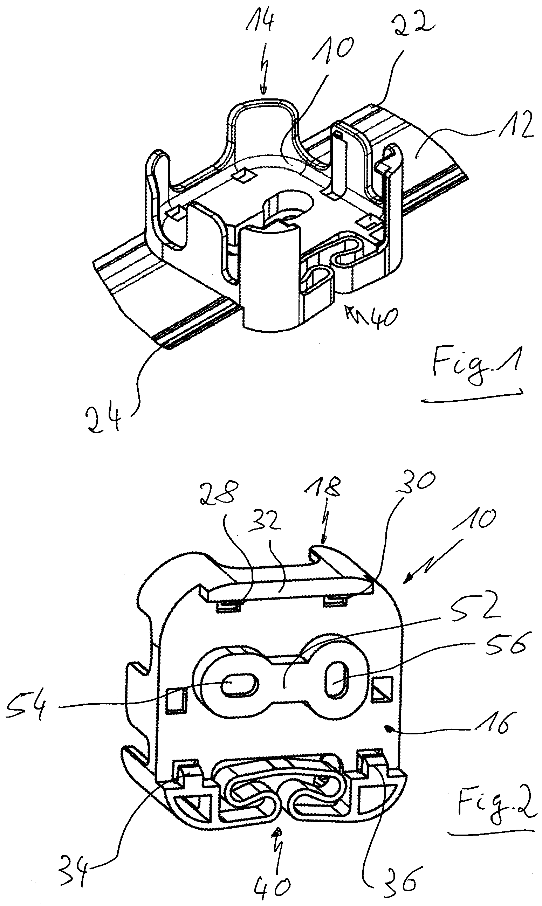

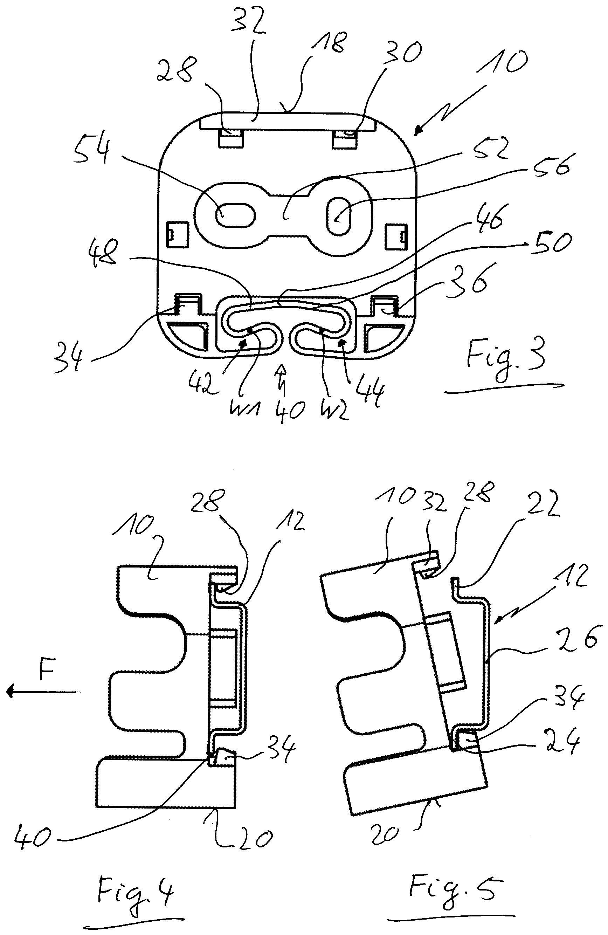

Fig. 1 zeigt eine perspektivische Ansicht eines Gehäuses 10, das an einer Hutschiene, beispielsweise einer DIN-Schiene 12 befestigt ist. Bei dem dargestellten Ausführungsbeispiel ist das Gehäuse 10 als offenes Gehäuse ausgebildet, das mit einem (nicht dargestellten) Oberteil verschlossen werden kann. Das Gehäuse 10 weist eine Vorderseite 14, eine Rückseite 16 (Fig. 2), eine Oberseite 18 (Fig. 2 und 3) und eine Unterseite 20 (Fig. 4 und 5) auf, wobei an der Rückseite 16 eine Hutschienenhalterung vorhanden ist.

Die Hutschiene 12 ist in Fig. 4 und Fig. 5 in einer Seitenansicht dargestellt und weist auf bekannte Art und Weise einen oberen abgekanteten Abschnitt 22 und einen koplanar dazu ausgebildeten unteren abgekanteten Abschnitt 24 auf, die zu einem Basisabschnitt 26 parallel beabstandet sind.

Die an der Rückseite 16 des Gehäuses 10 vorgesehene Hutschienenhalterung umfasst bei dem dargestellten Ausführungsbeispiel zwei obere Haltevorsprünge 28 und 30, die an einem vorstehenden Sims 32 des Gehäuses 10 angeformt sind. Weiterhin weist das Gehäuse 10 zumindest zwei an der Rückseite 16 und an deren Unterseite angeordnete Haltevorsprünge 34 und 36 auf. Sämtliche Haltevorsprünge sind hakenförmig ausgebildet und in einem Abstand zur rückseitigen Gehäusewand angeordnet, so dass der obere abgekantete Abschnitt 22 der Hutschiene 12 hinter die beiden oberen Haltevorsprünge 28 und 30 und der untere abgekantete Abschnitt 24 der Hutschiene 12 hinter die unteren Haltevorsprünge 34 und 36 eingeführt werden kann. Wie in diesem Zusammenhang Fig. 5 verdeutlicht, wird hierzu das Gehäuse 10 zunächst von unten an die Hutschiene 12 angesetzt und anschließend auf die Hutschiene abgeklappt, so dass der obere abgekantete Abschnitt 22 der Hutschiene 12 hinter die oberen Haltevorsprünge 28 und 30 gelangen kann. Diese Position ist in Fig. 4 dargestellt, wobei das Gehäuse 10 bzw. das in diesem angeordnete Installationsgerät auch durch dessen Eigengewicht in die in Fig. 4 dargestellte Stellung gebracht wird. In dieser ist das Gehäuse 10 an der Hutschiene 12 gehalten, auch wenn auf das Gehäuse 10 eine Kraft in Richtung des Pfeils F in Fig. 4 ausgeübt wird, da sämtliche Haltevorsprünge die Hutschiene hintergreifen.

Es ist wünschenswert und erforderlich, dass das Gehäuse 10 nicht versehentlich durch eine von unten wirkende Kraft von der Hutschiene 12 gelöst wird. Hierfür ist zwischen den beiden unteren Haltevorsprüngen 34 und 36 ein Federelement 40 vorgesehen, mit dem das Gehäuse 10 lösbar an der Hutschiene 12 befestigbar ist. Indem das Federelement 40 bei montiertem Gehäuse 10 vertikal nach oben gegen den unteren abgekanteten Abschnitt 24 der Hutschiene 13 drückt, wird das Gehäuse 10 relativ zur Hutschiene 12 nach unten gedrückt und dadurch sicher an der Hutschiene 12 gehalten.

Das Federelement 40 kann wie dargestellt eine Bandschlaufe sein, d.h. ein schlaufenförmig geformtes Band, dessen beide Enden im Bereich der unteren Haltevorsprünge 34 und 36 und zwischen diesen an das Gehäuse 10 angeformt sind. Wie insbesondere Fig. 3 verdeutlicht, ist das Federelement 40 so geformt, dass es in einer Seitenansicht einen (linken) S-förmigen Abschnitt 42 und einen (rechten) fragezeichenförmigen Abschnitt 44 aufweist. Hierdurch weist die Bandschlaufe des Federelementes 40 in der Seitenansicht einen ersten Wendepunkt W1 im Bereich des S-förmigen Abschnitts 42 und einen zweiten Wendepunkt W2 im Bereich des fragezeichenförmigen Abschnitts 44 auf. In der Mitte zwischen den beiden Abschnitten 42 und 44 befindet sich ein planarer Anlageabschnitt 46 des Federelementes 40, der beidseitig über jeweils einen planaren abgewinkelten Verbindungsabschnitt 48 und 50 in den S-förmigen Abschnitt 42 einerseits und den fragezeichenförmigen Abschnitt 44 andererseits übergeht. Durch Ausüben einer vertikal nach unten gerichteten Kraft auf den planaren Anlageabschnitt 46 kann das Federelement zusammengedrückt werden. Dies erfolgt bei Montage des Gehäuses 10 an der Hutschiene 12 dadurch, dass (vgl. Fig. 5) das Gehäuse 10 gegen die Kraft des Federelementes 40 nach oben gedrückt wird, wenn der untere abgekantete Abschnitt 24 der Hutschiene 12 die beiden unteren Haltevorsprünge 34 und 36 hintergreift. Nach Abklappen des Gehäuses 10 in Richtung der Hutschiene 12 (Fig. 4) kann das Gehäuse losgelassen werden, so dass die von dem Federelement 40 ausgeübte Kraft das Gehäuse 10 relativ zu der Hutschiene 12 in der in Fig. 4 dargestellten Position hält, in der alle vier Haltevorsprünge die Hutschiene 12 hintergreifen.

Da der planare Anlageabschnitt 46 und die beiden Verbindungsabschnitte 48, 50 sich über mindestens 40% und insbesondere über mindestens 50% des Abstands zwischen den beiden unteren Haltevorsprüngen 34 und 36 erstrecken, wird die bei Ansetzen des Gehäuses 10 an die Hutschiene 12 aufgebrachte Kraft gleichmäßig auf das Federelement 40 verteilt. Weiterhin kann die Länge des Federelements 40, d.h. eine Abwicklung der Bandschlaufe, mindestens das Doppelte des Abstands zwischen den beiden unteren Haltevorsprüngen 34 und 36 betragen, wodurch ein sehr langes Federelement auf sehr kompaktem Raum untergebracht werden kann.

Aus dem Vorstehenden sollte hervorgehen, dass das Federelement 40 nicht zur Aufnahme von Kräften geeignet ist, die orthogonal in Richtung F (vgl. Fig. 4) zur Rückseite oder zur Vorderseite des Gehäuses 10 orientiert sind. Diese Kräfte werden nämlich von den Haltevorsprüngen 28, 30, 34 und 36 aufgenommen.

Schließlich verdeutlichen die Fig. 2 und 3, dass an der Rückseite 16 des Gehäuses 10 im mittleren Bereich ein Abstandhalter 52 angeformt ist, der mit zwei Befestigungsöffnungen 54 und 56 versehen ist. Hierdurch kann das Gehäuse 10 auch mit Hilfe von Schrauben an einer Wand befestigt werden, wenn keine Hutschiene vorhanden ist.

## Patentansprüche

1. Gehäuse (10) zur Hutschienenmontage, das eine Vorderseite (14), eine Rückseite (16), eine Oberseite (18) und eine Unterseite (20) aufweist, wobei an der Rückseite (16) eine Hutschienenhalterung vorhanden ist, welche umfasst:
zumindest einen oberen Haltevorsprung (28, 30) und zumindest zwei untere Haltevorsprünge (34, 36), mit denen das Gehäuse (10) an einer Hutschiene (12) angebracht werden kann, und
ein Federelement (40) zwischen den beiden unteren Haltevorsprüngen (34, 36), mit dem das Gehäuse (10) lösbar an der Hutschiene (12) befestigbar ist,
**dadurch gekennzeichnet,**
**dass** das Federelement (40) einstückig an dem Gehäuse (10) angeformt ist.

2. Gehäuse nach Anspruch 1,
**dadurch gekennzeichnet,**
**dass** das Federelement (40) eine Bandschlaufe ist.

3. Gehäuse nach Anspruch 2,
**dadurch gekennzeichnet,**
**dass** die Bandschlaufe zwei Wendepunkte (W1, W2) aufweist.

4. Gehäuse nach einem der vorstehenden Ansprüche,
**dadurch gekennzeichnet,**
**dass** das Federelement (40) in einer Seitenansicht einen S-förmigen Abschnitt (42) und einen fragezeichenförmigen Abschnitt (44) aufweist.

5. Gehäuse nach einem der vorstehenden Ansprüche,
**dadurch gekennzeichnet,**
**dass** das Federelement (40) einen planaren Anlageabschnitt (46) aufweist.

6. Gehäuse nach Anspruch 5,
**dadurch gekennzeichnet,**
**dass** der Anlageabschnitt (46) beidseitig in jeweils einen planaren, abgewinkelten Verbindungsabschnitt (48, 50) übergeht.

7. Gehäuse nach einem der vorstehenden Ansprüche,
**dadurch gekennzeichnet,**
**dass** der planare Anlageabschnitt (46) und die beiden Verbindungsabschnitte (48, 50) sich über mindestens 40 % und insbesondere über mindestens 50 % des Abstands zwischen den beiden unteren Haltevorsprüngen (34, 36) erstrecken.

8. Gehäuse nach einem der vorstehenden Ansprüche,
**dadurch gekennzeichnet,**
**dass** die Länge des Federelements (40) mindestens das Doppelte des Abstands zwischen den beiden unteren Haltevorsprüngen (34, 36) beträgt.

9. Gehäuse nach einem der vorstehenden Ansprüche,
**dadurch gekennzeichnet,**
**dass** das Federelement (40) nicht zur Aufnahme von Kräften geeignet ist, die orthogonal zur Rückseite (16) des Gehäuses (10) orientiert sind.

10. Gehäuse nach einem der vorstehenden Ansprüche,
**dadurch gekennzeichnet,**
**dass** an dessen Rückseite (16) ein mit mindestens einer Befestigungsöffnung (54, 56) versehener Abstandhalter (52) angeformt ist.

11. Elektrisches Installationsgerät mit einem Gehäuse (10) nach einem der vorstehenden Ansprüche.
